# EUROPÄISCHE PATENTSCHRIFT

(11) **EP 2 335 831 B1**
(45) Veröffentlichungstag und Bekanntmachung des Hinweises auf die Patenterteilung: **05.06.2013**
(21) Anmeldenummer: 10014194.4
(22) Anmeldetag: 02.11.2010
(51) Int. Cl.: B05B 7/00, C08J 7/12

(54) **Verfahren zur Fluorierung von insbesondere aus Elastomeren und Thermoplasten bestehenden Bauteilen**
Method for fluorination of components, in particular those composed of elastomers and thermoplasts
Procédé de fluoration de composants notamment constitués d'élastomères et de thermoplastiques

(30) Priorität: 17.12.2009 DE 102009058910
(43) Veröffentlichungstag der Anmeldung: 22.06.2011
(73) Patentinhaber: Fluor Technik System GmbH, 36341 Lauterbach (DE)
(72) Erfinder: Möller, Bernd, 36341 Lauterbach (DE)
(74) Vertreter: Hebing, Norbert

(56) Entgegenhaltungen:
- DE-A1- 10 108 723
- DE-A1- 19 832 559
- Air products and Chemicals: "Fluor-Technologie; Fluor-"The Tiger of Chemistry"", , 2003, XP002630352, Gefunden im Internet: URL:http://www.airproducts.de/fluorination /fluortechnologie/pdf/FluorTechnologieAirP rod.pdf [gefunden am 2011-03-29]

## Beschreibung

Die Erfindung bezieht sich auf ein Verfahren zur Fluorierung von insbesondere aus Elastomeren und Thermoplasten bestehenden Bauteilen in einer Vakuumkammer, die zur Einleitung eines Fluorgases mit einer Fluorgasquelle verbunden ist, mit den folgenden Schritten:
- Einbringung der zu fluorierenden Bauteile in die Vakuumkammer,
- Evakuieren der Vakuumkammer,
- Einblasen des Fluorgases in die Vakuumkammer zur Einleitung einer Fluorierungsphase,
- Fluorierung der Bauteile durch Einwirken des Fluors während der Fluorierungsphase.

Ein derartiges Verfahren ist insbesondere in der DE 10 108 723 A1 beschrieben. Zur Fluorierung werden die Bauteile einem Fluorgas ausgesetzt, so dass das hochreaktive Fluor mit den Oberflächenmolekülen der Bauteile reagiert, so dass es zu einer Aktivierung der Oberfläche kommt, was es ermöglicht, die Bauteile in einem folgenden Schritt zu veredeln. So können z. B. Stoßstangen für Fahrzeuge mit einer Lackoberfläche oder die Innenseite von Flaschen mit einer Diffusionssperre versehen werden. Durch die Aktivierung der Oberfläche haften die aufgetragenen Schichten deutlich besser als ohne vorherige Fluorierung.

Üblicherweise werden die zu fluorierenden Bauteile in eine Vakuumkammer gebracht, die zunächst evakuiert wird. Sodann wird ein Fluorgas eingelassen, bis ein bestimmter Druck vorliegt, der im Allgemeinen unterhalb des Atmosphärendruckes liegt. Der Druck wird einige Zeit gehalten, damit das Fluor ausreichend Gelegenheit hat, auch in tiefere Schichten unterhalb der Oberfläche der Bauteile einzudringen. In der Regel wird nicht ein reines Fluorgas genutzt, sondern eine Mischung aus Fluor und Stickstoff, so dass im Folgenden mit dem Begriff Fluorgas sowohl ein reines Fluorgas als auch ein Gasgemisch gemeint sind.

Die verwendeten Vakuumkammern sind im Allgemeinen im Querschnitt rechteckig, um eine optimale Befüllung zu gewährleisten. Dies ist insbesondere auch notwendig, weil Fluorgas sehr teuer ist und daher aus Kostengründen optimal ausgenutzt werden sollte. Es hat sich aber gezeigt, dass bei quaderförmigen Vakuumkammern, die über einen einzigen Zufluss, z. B. in der Rückwand, für das Fluorgas verfügen, offensichtlich keine gleichmäßige Verteilung des Gases in der Vakuumkammer erreicht werden kann, so dass die Bauteile in unterschiedlichem Maße fluoriert werden. Dies hängt auch damit zusammen, dass sich das Fluor mit den Wasserstoffatomen der Kohlenstoffketten zu Fluorwasserstoff verbindet, das sich wie eine Maskierung auf die Oberfläche der Bauteile legt und verhindert, dass die freien Fluoratome des Fluorgases zur Oberfläche der Bauteile gelangen. Diese Maskierung macht sich insbesondere bei hohlen Bauteilen bemerkbar, da der Fluorwasserstoff im Hohlraum des Bauteils verbleibt und nicht herausgespült wird.

Die Erfindung beruht daher auf der Aufgabe, das Verfahren so zu gestalten, dass alle Bauteile in der Vakuumkammer im gleichen und ausreichenden Maße fluoriert werden.

Zur Lösung der Aufgabe schlägt die Erfindung vor, dass eine Vakuumkammer Verwendung findet, die mit einer Vielzahl von Düsen zum Einblasen des Fluorgases in die Vakuumkammer versehen ist, wobei die Düsen über das Volumen der Vakuumkammer verteilt sind, und dass die Bauteile derart in die Vakuumkammer eingebracht werden, dass ihre Verteilung in der Vakuumkammer mit der Verteilung der Düsen korrespondiert.

Gemäß der Erfindung wird somit das Fluorgas nun nicht mehr nur an einer Stelle in die Vakuumkammer eingeleitet, sondern über eine Vielzahl von Düsen. Dadurch wird jedes einzelne Bauteil gezielt von einer oder einer Gruppe von Düsen erreicht, so dass jedes Bauteil in gleicher Weise von dem aus den Düsen austretenden Gas erfasst wird. Dadurch liegen für alle Bauteile die gleichen Bedingungen vor, so dass eine gleichmäßige Fluorierung zu erwarten ist.

Um den Raum in der Vakuumkammer optimal auszunutzen, kann vorgesehen werden, dass jedes Bauteil genau im Strömungsbereich genau einer Düse liegt. Das heißt, es liegt eine 1:1-Zuordnung vor. Generell ist aber sowohl denkbar, dass eine Gruppe von Düsen für ein Bauteil vorgesehen ist, aber auch umgekehrt, dass jeweils kleine Gruppen von Bauteilen von einer Düse mit einem Gas beaufschlagt werden.

Wie oben schon erläutert, werden auch Hohlkörper, z. B. Flaschen oder Schlauchstücke, fluoriert. Um den Innenraum solcher Bauteile zu erreichen, werden diese so zu den Düsen ausgerichtet, dass die offene Seite des Innenraums den Düsen zugewandt ist, der Düsenstrahl also unmittelbar in den Innenraum des Hohlkörpers eindringt.

Eine optimale Ausnutzung der Vakuumkammer wird erreicht, wenn sowohl die Bauteile als auch die Düsen in Lagen abwechselnd angeordnet sind, d. h. die Bauteile befinden sich in einer Lage, die mit den Düsen der darüber liegenden oder darunter liegenden Lage zusammenwirken.

Durch dies zuvor beschriebene gezielte Anblasen der einzelnen Bauteile in einer Fluorierungsphase durch jeweils eine Düse lässt sich schon eine starke Vergleichmäßigung der Fluorierung der Bauteile erreichen. Das Problem der Maskierung mit Fluorwasserstoff wird allerdings dadurch noch nicht vollständig gelöst. Die Erfindung schlägt daher weiterhin vor, dass vor der Fluorierungsphase eine kurzzeitige Reinigungsphase liegt, in der ein Fluorgas in die Vakuumkammer eingeblasen wird, und dass die Vakuumkammer evakuiert wird, bevor erneut Fluorgas für die Fluorierungsphase eingeblasen wird.

Grundsätzlich kann eine Reinigungsphase auch bei Vakuumkammern gemäß dem Stand der Technik angewandt werden, bei denen eine einzige Gaszuführung für die gesamte Vakuumkammer vorhanden ist. Sie entfaltet aber ihre Wirkung besonders gut, wenn sie mit einer Einzelanstrahlung kombiniert ist.

In der kurzen Reinigungsphase verbinden sich Wasserstoffatome der Kohlenstoffwasserverbindung in der Oberfläche der Bauteile mit dem Fluor und bilden Fluorwasserstoff. Dieser wird zusammen mit dem wenigen eingebrachten Fluorgas wieder abgesaugt und kann somit die Oberflächen der Bauteile nicht mehr maskieren. In der eigentlichen Fluorierungsphase wird zwar auch weiterhin Fluorwasserstoff gebildet. Dies erfolgt aber zum Teil in tieferen Schichten unterhalb der Oberfläche, so dass der Fluorwasserstoff nicht unmittelbar aus der Oberfläche der Bauteile austreten kann. Das Fluor des Fluorgases kann somit stets unmittelbar auf die Bauteile einwirken.

Um den Verlust von Fluorgas in der Reinigungsphase möglichst gering zu halten, ist der maximale Druck während der Reinigungsphase kleiner als der maximale Druck in der Fluorierungsphase, vorzugsweise ist er kleiner als 200 mbar.

Es hat sich außerdem gezeigt, dass in der Reinigungsphase keine Druckhaltephase notwendig ist, in der der Druck konstant gehalten wird. Vielmehr kann das Fluor eingeblasen werden und zugleich wieder zusammen mit dem sich bis dahin gebildeten Fluorwasserstoff abgesaugt werden.

In vorteilhafter Weise kann der Reinigungsphase noch eine Spülphase vorgeschaltet werden, in der ausschließlich Stickstoff in die Vakuumkammer eingeblasen wird, der nachfolgend wieder abgesaugt wird. Damit lassen sich Feuchtigkeiten und Verschmutzungen der Bauteile entfernen.

Die Erfindung bezieht sich weiterhin auf eine Vorrichtung, die für die Durchführung des Verfahrens besonders geeignet ist.

Grundsätzlich kann daran gedacht werden, die Düsen ortsfest in der Vakuumkammer anzuordnen und die Bauteile zwischen den Düsen anzuordnen. Die Beschickung einer solchen Vakuumkammer ist allerdings sehr aufwändig, da die Düsen und das zugehörige Gasverteilungssystem die Beschickung behindern würden.

Es wird daher erfindungsgemäß ein mehrlagiges Gestell vorgeschlagen, das zum Bestücken mit den zu fluorierenden Bauteilen der Vakuumkammer entnehmbar ist. Die Düsen sind Bestandteil des Gestells, das zugehörige Kanalsystem des Gasverteilungssystems, das vorzugsweise in dem Gestell integriert ist, wird erst mit einem kammerfesten Kanalanschluss verbunden, wenn das beschickte Gestell in die Vakuumkammer eingesetzt wird.

Ein solches Gestell, das außerhalb der Vakuumkammer von allen Seiten zugängig ist, kann relativ leicht bestückt werden. Noch einfacher wird die Bestückung, wenn Tableaus des Gestells, die die Lagen des Gestells bilden, voneinander trennbar sind. Die Tableaus können einzeln bestückt werden und sodann aufeinander gestapelt werden. Die einzelnen Tableaus besitzen jeweils eine Vielzahl von Düsen und ein internes Kanalsystem. Durch das Aufeinanderstapeln der Tableaus werden die internen Kanalsysteme innerhalb der einzelnen Tableaus so miteinander verbunden, dass ein einheitliches Kanalsystem entsteht.

Das Kanalsystem besitzt vorzugsweise eine Hauptsteigleitung, die von Kanälen innerhalb von Sockeln der Tableaus gebildet werden. Von der oder den Hauptleitungen gehen Nebenleitungen innerhalb der einzelnen Tableaus zu den in den Tableaus angeordneten Düsen ab.

Im Folgenden soll anhand eines Ausführungsbeispieles die Erfindung näher erläutert werden. Dazu zeigen:
- Fig.1: eine schematisch dargestellte Anordnung zur Durchführung des erfindungsgemäßen Verfahrens,
- Fig.2: ein Diagramm zur Darstellung des zeitlichen Ablaufs einer Fluorierung gemäß dem erfindungsgemäßen Verfahren und
- Fig.3: ein schematisch dargestelltes Gestell mit Düsen zur Aufnahme von zu fluorierenden Bauteilen.

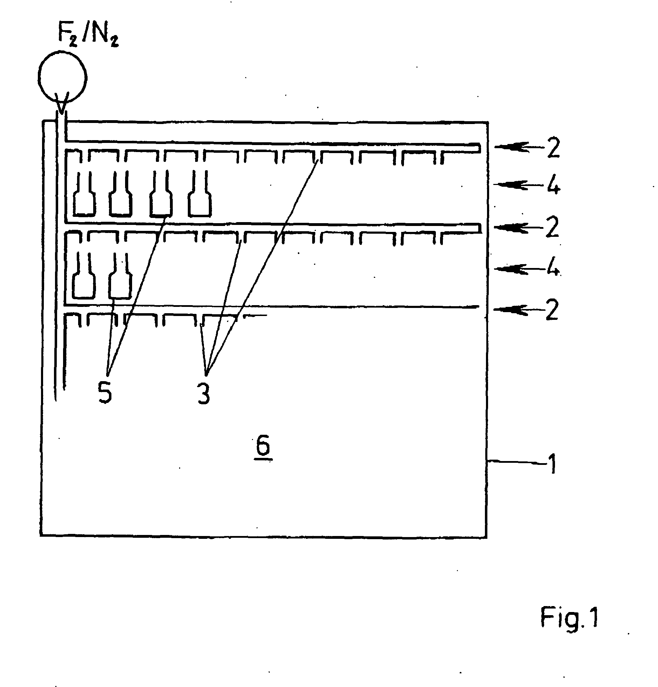

Die Figur 1 zeigt im Querschnitt eine Vakuumkammer 1, in der in mehreren ersten Lagen 2 sowohl nebeneinander in der dargestellten Querschnittsebene als auch hintereinander in einer Ebene senkrecht zur Zeichnungsebene Düsen 3 angeordnet sind. Zwischen den ersten Lagen 2 befinden sich zweite Lagen 4, auf denen in entsprechender Weise Bauteile 5 angeordnet sind. Jede Lage 2, 4 ist also rechteckig.

Sowohl die Düsen 3 als auch die Bauteile 5 sind somit in den zugeordneten Lagen 2, 4 in einer rechteckigen Verteilung angeordnet. Vorzugsweise ist - wie dargestellt - jede Düse 3 genau einem Bauteil 5 zugeordnet. Man erkennt ohne weiteres, dass jedes Bauteil 5 in gleicher Weise mit Fluorgas, das aus den Düsen 3 austritt, beaufschlagt wird, so dass davon auszugehen ist, dass eine gleichmä-Bige Fluorierung erfolgt. Bei den Bauteilen 5 handelt es sich um Hohlkörper, hier symbolisch dargestellt durch die Topfform. Die Bauteile werden so ausgerichtet, dass die Düsen 3 jeweils in den Innenraum 6 eines Bauteils 5 hinein gerichtet sind. Die Düsen 3 können verschiedene Formen annehmen. Sie können z. B. an Enden von kurzen Schläuchen ausgebildet sein, die in den Innenraum 6 hineinragen. Ein Kanalsystem zum Zuführen des Gases zu den Düsen 3 ist weiter unten erläutert.

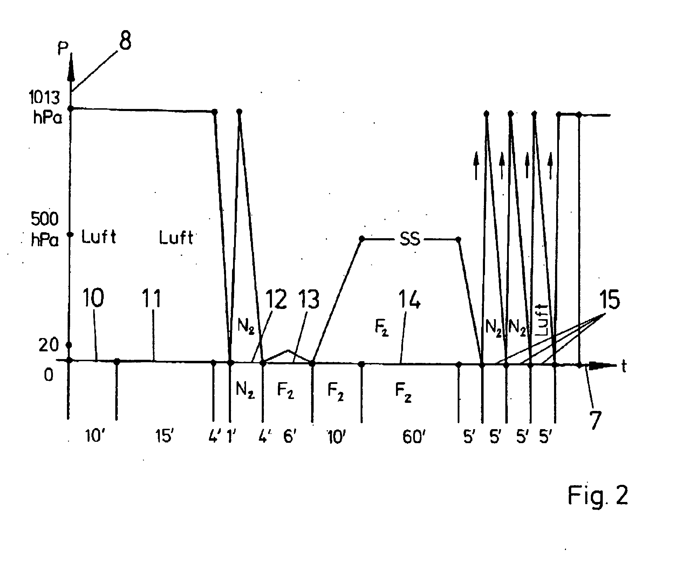

In Figur 2 ist ein Zeitdiagramm zur Darstellung des Ablaufs eines Fluorierungsverfahrens dargestellt. Auf der X-Achse 7 ist die Zeit aufgetragen, auf der Y-Achse 8 der Druck, der in der Vakuumkammer 1 herrscht. In der Ladephase 10 werden die Bauteile 5 in die Vakuumkammer 1 eingebracht. Dabei befindet sich wegen der offenen Tür der Vakuumkammer 1 Luft bei Atmosphärendruck in der Vakuumkammer 1. In der sich anschließenden Heizphase 11 werden die Bauteile vorzugsweise bei geschlossener Tür erwärmt, was die Fluorierung beschleunigt und verbessert. Sodann wird die Tür geschlossen und Luft abgesaugt. Sodann erfolgt eine erste Stickstoffspülung 12, wobei Stickstoff bis zum Atmosphärendruck in die Vakuumkammer eingelassen und anschließend zugleich wieder abgesaugt wird. Dabei werden Verunreinigungen und Wasserfilme auf der Oberfläche der Bauteile abgetragen. Eine Entfeuchtung ist notwendig, da die eigentliche Fluorierung an möglichst trockenen Bauteilen erfolgen soll.

Danach folgt eine Reinigungsphase 13, in der kurzzeitig ein Fluorgas (in der Regel ein Gemisch aus Fluor und Stickstoff) in die Vakuumkammer 1 eingelassen wird. Hierbei bildet sich Fluorwasserstoff, der zusammen mit dem nicht umgesetzten Fluorgas abgesaugt wird. In der Reinigungsphase 13 wird nur ein geringer Druck von z. B. 20 mbar erreicht, der nicht gehalten wird.

Danach schließt sich in einer Fluorierungsphase 14 die eigentliche Fluorierung an. Es wird ein Fluorgas bis zu einem Druck von ca. 500 mbar eingelassen, dieser Druck wird für einige Zeit gehalten, danach wird das Restfluorgas abgesaugt und gegebenenfalls recycelt.

Daran schließen sich mehrere zweite Spülungen 15 a, b, c mit Stickstoff bzw. Luft an, um die Atmosphäre in der Vakuumkammer soweit zu verdünnen, dass die Konzentration des Restfluors so gering ist, dass mindestens gesetzliche MAK-Werte (maximale Arbeitsplatzkonzentration) eingehalten werden. Danach wird die Vakuumkammer 1 geöffnet und die fluorierten Bauteile 5 entnommen.

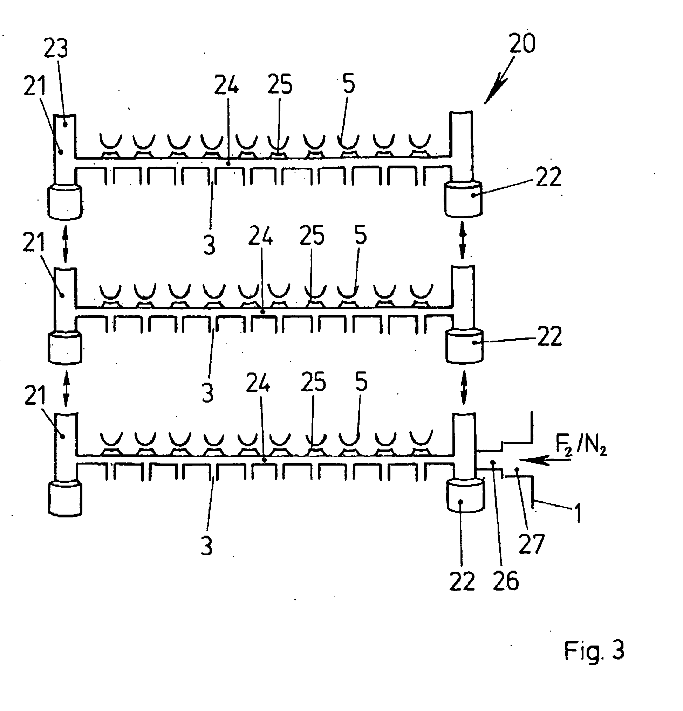

Die Figur 3 zeigt ein Gestell 20 im Querschnitt, das für das erfindungsgemäße Verfahren eingesetzt werden kann. Das Gestell 20 besteht aus mehren stapelbaren Tableaus 21. Diese sind rechteckig und besitzen an ihren Ecken Sockel 22. Diese Sockel 22 sind hohl ausgeführt und bilden, wenn sie aufeinander gesteckt werden, eine Hauptleitung 23. Die einzelnen Tableaus 21 sind mit Kanälen durchzogen, die Nebenleitungen bilden und zu den Düsen 3 an der Unterseite der Tableaus 21 führen. Die Hauptleitungen 23 und die Nebenleitungen 24 bilden ein Kanalsystem, das über einen einzigen Kanalanschluss 27 an einer Innenwand der Vakuumkammer angeschlossen wird, wenn das Gestell in der Vakuumkammer 1 eingesetzt ist, so dass das Kanalsystem mit Gas versorgt werden kann. Eines der Tableaus 21 besitzt dazu einen externen Anschluss 26, der mit dem Kanalanschluss 27 innerhalb der Vakuumkammer 1 koppelbar ist. An der Oberseite des Tableaus 21 befinden sich Aufnahmen 25 für die Bauteile 5.

Werden die Tableaus 21 übereinander gestapelt, befindet sich jeweils das Bauteil auf einem Tableau 21 unterhalb der Düsen 3 des darüber liegenden Tableaus 21. Die Tableaus 21 definieren somit die Lagen 2 und 4 der Düsen 3 bzw. der Bauteile 5. Die Verteilung der Aufnahmen 25 und der Düsen 3 und deren Form richten sich nach den Formen und Größen der zu fluorierenden Bauteile 3. Dementsprechend werden verschiedenartige Tableaus 21 bereitgehalten.

### Bezugszeichenliste

- 1: Vakuumkammer
- 2: erste Lagen
- 3: Düsen
- 4: zweite Lagen
- 5: Bauteile
- 6: Innenraum
- 7: X-Achse
- 8: Y-Achse
- 10: Ladephase
- 11: Heizphase
- 12: erste Spülung
- 13: Reinigungsphase
- 14: Fluorierungsphase
- 15: zweite Spülungen
- 20: Gestell
- 21: Tableaus
- 22: Sockel
- 23: Hauptleitung
- 24: Nebenleitungen
- 25: Aufnahmen
- 26: externer Anschluss
- 27: Kanalanschluss

## Patentansprüche

1. Verfahren zur Fluorierung von insbesondere aus Elastomeren und Thermoplasten bestehenden Bauteilen (5) in einer Vakuumkammer (1), die zur Einleitung eines Fluorgases mit einer Fluorgasquelle verbunden ist, mit den folgenden Schritten:
Einbringung der zu fluorierenden Bauteile (5) in die Vakuumkammer (1),
Evakuieren der Vakuumkammer (1),
Einblasen des Fluorgases in die Vakuumkammer (1) zur Einleitung einer Fluorierungsphase (14),
Fluorierung der Bauteile (5) durch Einwirken des Fluors während der Fluorierungsphase (14).
**dadurch gekennzeichnet, dass**
eine Vakuumkammer (1) Verwendung findet, die mit einer vielzahl von Düsen (3) zum Einblasen des Fluorgases in die Vakuumkammer (1) versehen ist, wobei die Düsen (3) über das Volumen der Vakuumkammer (1) verteilt sind, und dass
die Bauteile (5) derart in die Vakuumkammer (1) eingebracht werden, dass ihre Verteilung in der Vakuumkammer (1) mit der Verteilung der Düsen () korrespondiert.

2. Verfahren nach Anspruch 1, **dadurch gekennzeichnet, dass** jedes Bauteil (5) im Strömungsbereich genau einer Düse (3) liegt.

3. verfahren nach Anspruch 1 oder 2, **dadurch gekennzeichnet, dass** es sich bei den Bauteilen (5) um Hohlkörper handelt, die zumindest auf einer Seite offen sind, und dass die Hohlkörper so ausgerichtet sind, dass ihre offenen Seiten den Düsen (3) zugewandt sind.

4. Verfahren nach Anspruch 1, **dadurch gekennzeichnet, dass** die Bauteile (5) als auch die Düsen (3) in Lagen (4, 2) angeordnet sind.

5. Verfahren nach einem der vorhergehenden Ansprüche, **dadurch gekennzeichnet, dass** vor der Fluorierungsphase (14) eine kurzzeitige Reinigungsphase (13) liegt, in der ein Fluorgas in die vakuumkammer (1) eingeblasen wird, und dass die Vakuumkammer evakuiert wird, bevor erneut Fluorgas für die Fluorierungsphase (14) eingeblasen wird.

6. Verfahren nach Anspruch 5, **dadurch gekennzeichnet, dass** in der Reinigungsphase (13) der maximale Druck in der Vakuumkammer (1) kleiner ist als der maximale Druck in der Fluorierungsphase (14).

7. Verfahren nach Anspruch 6, **dadurch gekennzeichnet, dass** der maximale Druck in der Reinigungsphase (13) kleiner ist als 200 mbar.

8. Verfahren nach Anspruch 5, 6 oder 7, **dadurch gekennzeichnet, dass** die Reinigungsphase (13) keine Druckhaltephase aufweist, in der der Druck konstant gehalten wird.

9. Verfahren nach Anspruch 5, 6, 7 oder 8, **dadurch gekennzeichnet, dass** der Reinigungsphase (13) eine Spülphase (12) vorgeschaltet ist, in der Stickstoff in die vakuumkammer (1) eingeblasen wird, der nachfolgend wieder abgesaugt wird.

10. Vorrichtung zur Durchführung eines Verfahrens nach einem der vorgehenden Ansprüche, **dadurch gekennzeichnet, dass** die Vakuumkammer (1) ein mehrlagiges Gestell (20) aufweist, das zum Bestücken mit den zu fluorierenden Bauteilen (5) der Vakuumkammer (1) entnehmbar ist, dass das Gestell (20) in jeder seiner Tableaus (21) über die Fläche verteilte Düsen (3) aufweist, wobei alle Düsen (3) über ein Kanalsystem miteinander verbunden sind, dass das Kanalsystem des Gestells (20) einen externen Anschluss (26) aufweist und die Vakuumkammer einen korrespondierenden Kanalanschluss (27) aufweist.

11. Vorrichtung nach Anspruch 10, **dadurch gekennzeichnet, dass** die Anschlüsse (26, 17) jeweils so angeordnet sind, dass sie beim Einsetzen des Gestells (20) in die vakuumkammer (1) selbsttätig miteinander gekoppelt werden.

12. Vorrichtung nach Anspruch 10 oder 11, **dadurch gekennzeichnet, dass** die Tableaus (21) des Gestells (20) voneinander trennbar sind und mit korrespondierenden internen Anschlüssen versehen sind, die, um das Kanalsystem zu schließen, miteinander gekoppelt werden, wenn die Tableaus (21) zu einem Gestell (20) zusammengesteckt werden.

13. Vorrichtung nach Anspruch 12, **dadurch gekennzeichnet, dass** die einzelnen Tableaus (21) jeweils wenigstens drei Sockel (22) besitzen, die beim Zusammensetzen der Tableaus (21) zu einem Gestell (20) aufeinander gesteckt werden, so dass sich Tragsäulen für das Gestell (20) bilden, und dass wenigstens ein Sockel (22) eines jeden Tableaus (21) hohl ausgeführt sind, so dass die von den hohlen Sockeln (22) gebildete Tragsäule eine Hauptleitung (23) des Kanalsystems bildet.

## Claims

1. A method for the fluorination of components (5), comprising in particular elastomers and thermoplastics, in a vacuum chamber (1) which, for the introduction of a fluorine gas, is connected to a fluorine gas source, with the following steps:
introduction of the components (5) to be fluorinated into the vacuum chamber (1),
evacuation of the vacuum chamber (1),
injecting the fluorine gas into the vacuum chamber (1) for initiating a fluorination phase (14),
fluorination of the components (5) due to the influence of the fluorine during the fluorination phase (14),
**characterised in that**
use is made of a vacuum chamber (1) which is provided with a plurality of nozzles (3) for injecting the fluorine gas into the vacuum chamber (1), wherein the nozzles (3) are distributed over the volume of the vacuum chamber (1), and that
the components (5) are introduced into the vacuum chamber (1) in such a way that their distribution in the vacuum chamber (1) corresponds to the distribution of the nozzles (3).

2. The method according to claim 1, **characterised in that** each component (5) lies in the flow region of precisely one nozzle (3).

3. The method according to claim 1 or 2, **characterised in that** the components (5) are hollow bodies, which are open at least on one side, and that the hollow bodies are aligned in such a way that their open sides are turned towards the nozzles (3).

4. The method according to claim 1, **characterised in that** the components (5) and also the nozzles (3) are disposed in layers (4, 2).

5. The method according to any one of the preceding claims, **characterised in that**, prior to the fluorination phase (14), there is a brief cleaning phase (13), in which a fluorine gas is injected into the vacuum chamber (1), and that the vacuum chamber is evacuated before fluorine gas is again injected for the fluorination phase (24).

6. The method according to claim 5, **characterised in that**, in the cleaning phase (13), the maximum pressure in the vacuum chamber (1) is less than the maximum pressure in the fluorination phase (14).

7. The method according to claim 6, **characterised in that** the maximum pressure in the cleaning phase (13) is less than 200 mbar.

8. The method according to claim 5, 6 or 7, **characterised in that** the cleaning phase (13) does not have a pressure holding phase in which the pressure is kept constant.

9. The method according to claim 5, 6, 7 or 8, **characterised in that** a rinsing phase (12) takes place before the cleaning phase (13), whereby in the rinsing phase nitrogen is injected into the vacuum chamber (1), said nitrogen subsequently being removed again by suction.

10. A device for performing a method according to any one of the preceding claims, **characterised in that** the vacuum chamber (1) comprises a multilayer frame (20), which can be removed from the vacuum chamber (1) in order to be filled with the components (5) to be fluorinated, that the frame (20) comprises nozzles (3) distributed over the area in each of its trays (21), wherein all the nozzles (3) are connected to each other via a channel system, that the channel system of the frame (20) comprises an external connection (26), and the vacuum chamber comprises a corresponding channel connection (27).

11. The device according to claim 10, **characterised in that** the connections (26, 17) are each disposed in such a way that they are automatically coupled with each other when the frame (20) is introduced into the vacuum chamber (1).

12. The device according to claim 10 or 11, **characterised in that** the trays (21) of the frame (20) can be separated from each other and are provided with corresponding internal connections which, in order to close the channel system, are coupled with each other when the trays (21) are fitted together to form a frame (20).

13. The device according to claim 12, **characterised in that** the individual trays (21) each comprise at least three pedestals (22), which are pushed onto one another when the trays (21) are fitted together to form a frame (20), so that support columns for the frame (20) are formed, and that at least one pedestal (22) of each tray (21) is constituted hollow, so that the support column formed by the hollow pedestals (22) forms a main line (23) of the channel system.

## Revendications

1. Procédé de fluoration de composants (5) notamment constitués d'élastomères et de thermoplastiques dans une chambre à vide (1) qui est reliée à une source de gaz fluor pour introduction d'un gaz fluor, avec les étapes suivantes :
introduction des composants (5) à fluorer dans la chambre à vide (1),
évacuation de la chambre à vide (1),
injection du gaz fluor dans la chambre à vide (1) pour initier une phase de fluoration (14),
fluoration des composants (5) par action du fluor pendant la phase de fluoration (14),
**caractérisé en ce qu'**
une chambre à vide (1) est utilisée, qui est munie d'une pluralité de buses (3) pour injecter du gaz fluor dans la chambre à vide (1), les buses (3) étant réparties sur le volume de la chambre à vide (1) et **en ce que**
les composants (5) sont introduits dans la chambre à vide (1) de telle sorte que leur répartition dans la chambre à vide (1) correspond à la répartition des buses (3).

2. Procédé selon la revendication 1 **caractérisé en ce que** chaque composant (5) se trouve exactement dans la zone d'écoulement d'une buse (3).

3. Procédé selon la revendication 1 ou 2 **caractérisé en ce que** concernant les composants (5), il s'agit de corps creux qui sont au moins ouverts d'un côté et **en ce que** les corps creux sont orientés de telle sorte que leurs côtés ouvertes sont tournés vers les buses (3) .

4. Procédé selon la revendication 1 **caractérisé en ce que** les composants (5) ainsi que les buses (3) sont disposés en couches (4, 2).

5. Procédé selon une quelconque des revendications précédentes **caractérisé en ce qu'**avant la phase de fluoration (14), il y a une phase de nettoyage (13) courte dans laquelle un gaz fluor est injecté dans la chambre à vide (1) et **en ce que** la chambre à vide est évacuée avant qu'une gaz fluor soit à nouveau injecté pour la phase de fluoration (14).

6. Procédé selon la revendication 5 **caractérisé en ce que** dans la phase de nettoyage (13), la pression maximale dans la chambre à vide (1) est plus faible que la pression maximale dans la phase de fluoration (14).

7. Procédé selon la revendication 6 **caractérisé en ce que** la pression maximale dans la phase de nettoyage (13) est inférieure à 200 mbars.

8. Procédé selon la revendication 5, 6 ou 7 **caractérisé en ce que** la phase de nettoyage (13) ne présente pas de phase de maintien de pression dans laquelle la pression est maintenue constante.

9. Procédé selon la revendication 5, 6, 7 ou 8 **caractérisé en ce qu'**une phase de rinçage (12) est intercalée avant la phase de nettoyage (13), dans laquelle de l'azote est injecté dans la chambre à vide (1) qui est à nouveau aspiré ultérieurement.

10. Dispositif pour exécuter un procédé selon une quelconque des revendications précédentes **caractérisé en ce que** la chambre à vide (1) présente un châssis (20) à couches multiples qui est escamotable pour charger la chambre à vide (1) avec les composants (5) à fluorer, **en ce que** le châssis (20) présente dans chacun de ses panneaux (21) des buses (3) réparties sur la surface, toutes les buses (3) étant reliées entre elles par un système de conduits, **en ce que** le système de conduits du châssis (20) présente un raccord externe (26) et la chambre à vide présente un raccord de conduit (27) correspondant.

11. Dispositif selon la revendication 10 **caractérisé en ce que** les raccords (26, 17) sont disposés à chaque fois de telle sorte qu'ils sont couplés entre eux automatiquement lors de l'insertion du châssis (20) dans la chambre à vide (1).

12. Dispositif selon la revendication 10 ou 11 **caractérisé en ce que** les panneaux (21) du châssis (20) sont séparables l'un de l'autre et sont munis des raccords internes correspondants qui sont couplés entre eux pour fermer le système de conduits, lorsque les panneaux (21) sont branchés ensemble au châssis (20).

13. Dispositif selon la revendication 12 **caractérisé en ce que** les panneaux (21) individuels possèdent à chaque fois au moins trois socles (22) qui sont branchés l'un sur l'autre à un châssis (20) lors de l'assemblage des panneaux (21) de sorte que des colonnes porteuses se forment pour le châssis (20) et qu'au moins un socle (22) de chaque panneau (21) soit réalisé creux de sorte que la colonne porteuse formée par les socles (22) creux forme un conduit principal (23) du système de conduits.
